(19) Europäisches Patentamt

European Patent Office

Office européen des brevets

(11) **EP 0 802 867 B1**

(12) **EUROPÄISCHE PATENTSCHRIFT**

(45) Veröffentlichungstag und Bekanntmachung des Hinweises auf die Patenterteilung:
**16.09.1998 Patentblatt 1998/38**

(21) Anmeldenummer: **95938464.5**

(22) Anmeldetag: **23.11.1995**

(51) Int. Cl.$^6$: **B60R 16/02**

(86) Internationale Anmeldenummer:
**PCT/EP95/04615**

(87) Internationale Veröffentlichungsnummer:
**WO 96/19362 (27.06.1996 Gazette 1996/29)**

(54) **STEUERUNG DER STROMAUFNAHME MEHRERER STROMVERBRAUCHER IN EINEM KRAFTFAHRZEUG**

CURRENT CONSUMPTION CONTROL FOR SEVERAL CURRENT CONSUMERS IN A MOTOR VEHICLE

COMMANDE DE LA CONSOMMATION DE COURANT DE PLUSIEURS CONSOMMATEURS DE COURANT DANS UN VEHICULE A MOTEUR

(84) Benannte Vertragsstaaten:
**BE DE FR GB**

(30) Priorität: **21.12.1994 DE 4445647**

(43) Veröffentlichungstag der Anmeldung:
**29.10.1997 Patentblatt 1997/44**

(73) Patentinhaber: **AUDI AG**
**85045 Ingolstadt (DE)**

(72) Erfinder: **WINKLER, Josef**
**D-85110 Kipfenberg (DE)**

(56) Entgegenhaltungen:
**EP-A- 0 593 299          DE-A- 3 007 941**

**Beschreibung**

Die vorliegende Erfindung betrifft eine Schaltungsanordnung zur Steuerung der Stromaufnahme eines oder mehrerer leistungsstarker Verbraucher in einem Kraftfahrzeug. Außerdem bezieht sich die Erfindung auch auf ein Verfahren zur Steuerung der Stromaufnahme eines oder mehrerer leistungsstarker Verbraucher in einem Kraftfahrzeug.

Werden mehrere Stromverbraucher in einem Kraftfahrzeug gleichzeitig eingeschaltet, so reicht oft der vom Generator gelieferte Ausgangsstrom nicht aus, um den Stromverbrauch aller Verbraucher im Kraftfahrzeug zu decken. Dies ist insbesondere dann der Fall, wenn unter den Stromverbrauchern leistungsstarke Heizungseinrichtungen sind. Reicht der vom voll ausgelasteten Generator gelieferte Strom in einem solchen Fall nicht aus, so beziehen die Verbraucher zusätzlich Strom aus der Fahrzeugbatterie, was zu einer Entladung der Batterie nach einer gewissen Zeitspanne führt.

Um ein Entladen der Fahrzeugbatterie zu verhindern, ist man dazu übergegangen, Heizungen mit mehreren getrennt einschaltbaren Heizelementen in Fahrzeuge einzubauen. Eine elektrische Heizung, bei der die einzelnen Heizelemente individuell an das Stromversorgungsnetz des Fahrzeugs geschaltet werden, ist beispielsweise in der DE 35 09 073 A1 beschrieben. Die einzelnen Heizwiderstände werden individuell ein- bzw. abgeschaltet, je nachdem, ob ein Leistungsüberschuß des Generators vorhanden ist oder nicht.

Es sind auch Schaltungsanordnungen bekannt, die dafür sorgen, daß einzelne Verbraucher einer Gruppe von mehreren in einem Kraftfahrzeug eingebauten Stromverbrauchern bei Überlastung des Generators abgeschaltet werden.

Der vorliegenden Erfindung liegt die Aufgabe zugrunde, eine Schaltungsanordnung zur Steuerung der Stromaufnahme von Stromverbrauchern in einem Kraftfahrzeug zu schaffen, die ein Entladen der Fahrzeugbatterie auch während des Betriebs der leistungsstarken Verbraucher verhindert.

Diese Aufgabe wird durch eine Schaltungsanordnung zur Steuerung der Stromaufnahme eines oder mehrerer leistungsstarker Verbraucher in einem Kraftfahrzeug mit den Merkmalen des Anspruchs 1 gelöst. Diese Schaltungsanordnung umfaßt einen Drehstromgenerator, einen im Drehstromgenerator untergebrachten Regler zur Regelung der Generatorausgangsspannung mit einer Ausgangsklemme, eine durch den Drehstromgenerator aufladbaren Fahrzeugbatterie und einen steuerbaren Spannungswandler. Dabei weist der Spannungswandler wenigstens einen Eingangsanschluß zum Empfangen einer von dem Drehstromgenerator gelieferten Eingangsspannung, einen Steueranschluß zum Empfangen eines an der Ausgangsklemme des Reglers anliegenden Reglersignals und wenigstens einen Ausgangsanschluß zur Versorgung des leistungsstarken Verbrauchers mit einer Ausgangsspannung auf, wobei die Eingangsspannung in Abhängigkeit von dem Reglersignal in eine Ausgangsspannung umgewandelt wird.

Diese in Anspruch 1 angegebene Schaltungsanordnung ermöglicht die Durchführung des in Anspruch 8 angegebenen Verfahrens zur Steuerung der Stromaufnahme eines oder mehrerer in einem Kraftfahrzeug eingebauten Verbrauchern. Erfindungsgemäß wird die Ausgangsspannung des Spannungswandlers derart gesteuert, daß

- immer dann ein Herabsetzen der Ausgangsspannung des Spannungswandlers erfolgt, wenn die Impulsbreite des am Ausgangsanschluß des Reglers anliegenden Reglersignals einen unteren Grenzwert w unterschreitet und

- ein Erhöhen der Ausgangsspannung des Spannungswandlers immer dann erfolgt, wenn die Pulsbreite des an der Ausgangsanschluß des Reglers anliegenden Reglersignals eine obere Grenze W überschreitet.

Vorteilhafte Ausgestaltungen der in Anspruch 1 angegebenen Schaltungsanordnung sind in den Unteransprüchen 2-7 angegeben.

Ein Vorteil dieser Erfindung ist es, daß das am Reglerausgang und an einem Ende der Erregerspule anliegende Reglersignal als Steuersignal benutzt werden kann. Der Regler tastet nämlich die Ausgangsspannung des Generator laufend ab und unterbricht immer dann den Erregerstromkreis, wenn die Ausgangsspannung des Generators einen oberen Schwellenwert überschreitet. Daher schwankt am Regler am Reglerausgang die Spannung zwischen einem hohen Spannungspegel und einem niedrigen Spannungspegel. Ein hoher Spannungspegel liegt immer dann an, wenn der Erregerstromkreis des Generators unterbrochen ist. Eine hohe Pulsbreite bedeutet, daß der Generator nicht ausgelastet ist, und eine geringe Pulsbreite bedeutet, daß der Generator ausgelastet oder überlastet ist. Denn ein niedriger Spannungspegel liegt am Reglerausgangsanschluß immer dann an, wenn durch die Erregerspule ein Erregerstrom fließt.

Dieses Reglersignal mit veränderlicher Spannungsimpulsbreite kann vorteilhafterweise einem Gleichstrom-Gleichstrom-Wandler (im folgenden DC-DC-Wandler genannt) über dessen Steuereingang zugeführt werden, um am Ausgang des DC-DC-Wandlers eine von der Pulsbreite der Spannungsimpulse des Reglersignals abhängigen Ausgangsspannung zu erhalten.

Wie in Anspruch 4 angegeben, läßt sich ein solcher DC-DC-Wandler auf einfache Weise aus einem Zähler und aus einem Digital-Analog-Wandler (im folgenden DA-Wandler genannt) zusammenbauen. Mit dem Zähler kann die Impulsbreite bzw. Impulsdauer des Steuersignals erfaßt werden und in Form eines digitalen Wertes(Zählerstand) erhalten werden. Dieser digitale Wert kann mittels des DA-Wandlers in eine dem Zählerstand proportionale Ausgangspannung umgewandelt werden.

Statt eines DC-DC-Wandlers kann auch ein Wandler (im folgenden AC-AC-Wandler genannt) verwendet werden, der die direkt von den Statorspulen des Generators gelieferten Wechselspannungen in eine Ausgangswechselspannung umwandelt, die zur Pulsbreite des am Reglerausgangs anliegenden Steuersignals proportional ist. Ein AC-AC-Wandler kann immer dann eingesetzt werden, wenn ein mit Wechselspannung betriebener Verbraucher oder ein mit einer vorgeschalteten Gleichrichterspannung ausgestatteter Verbraucher im Kraftfahrzeug vorliegt.

Wie in Anspruch 6 angegeben, läßt sich der AC-AC-Wandler auf einfache Weise mittels einer Thyristoreinheit bauen, bei der das Steuersignal den Steueranschlüssen der Thyristoren zugeführt werden. Bei Bedarf kann der Thyristoreinheit noch ein Trafo nachgeschaltet sein. Da das Steuersignal den Steueranschlüssen der Thyristoren zugeführt wird, wird eine von diesem Steuerimpuls abhängige Ausgangswechselspannung am Ausgang des AC-AC-Wandlers erhalten.

Der wohl wesentlichste Vorteil der erfindungsgemäßen Schaltungsanordnung ist darin zu sehen, daß durch die erfindungsgemäße Steuerung der Stromaufnahme der Verbraucher auch leistungsschwache Generatoren in Fahrzeugen eingesetzt werden können, ohne daß dies zu einer Entladung der Fahrzeugbatterie führt.

Im folgenden werden zwei Ausführungsformen anhand der beigefügten Zeichnungen beschrieben. In den Zeichnungen zeigt:

Fig. 1 eine erste Ausführungsform der erfindungsgemäßen Schaltungsanordnung, bei der der Spannungwandler ein DC-DC-Wandler ist;

Fig. 2 eine zweite Ausführungsform der erfindungsgmäßen Schaltungsanordnung, bei der der Spannungswandler ein AC-AC-Wandler ist;

Fig. 3 den zeitlichen Spannungsverlauf des Steuersignals;

Fig. 4a eine mögliche Ausführungsvariante des Spannungswandlers und

Fig. 4b eine weitere mögliche Ausführungsvariante des Spannungwandlers.

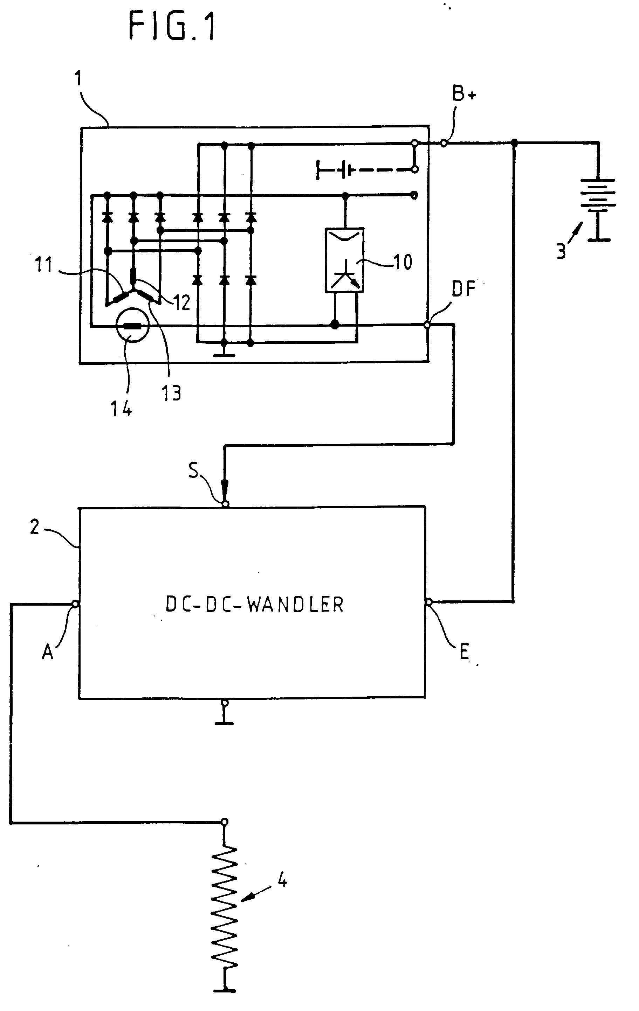

Die in Fig. 1 gezeigte Schaltungsanordnung umfaßt einen Drehstromgenerator 1, einen Spannungswandler 2, eine Fahrzeugbatterie 3 und einen Verbraucher 4.

Der Drehstromgenerator enthält drei auf einem nicht gezeigten Ständer angeordneten Ständerwicklungen 11, 12 und 13 und eine Erregerwicklung 14, die auf dem nicht dargestellten Läufer des Generators 1 angeordnet ist. Im Generator ist ferner ein Regler 10 untergebracht, der zur Regelung der an einer Klemme B+ anliegenden Generator-Ausgangsspannung dient. Der Regler 10 tastet die in die Ständerwicklungen 11, 12, 13 induzierten Wechselspannungen ab und unterbricht den Erregerstromkreis immer dann, wenn die Wechselspannungen in den Ständerwicklungen einen oberen Schwellenwert überschreiten. Die Erregerspule 14 ist nämlich nur dann an Masse geschlossen, wenn der Transistor der Reglerausgangsstufe leitend ist. Der Kollektor des Transistors der Reglerausgangsstufe ist mit einer Klemme DF verbunden, die im folgenden als Ausgangsklemme des Reglers bezeichnet ist.

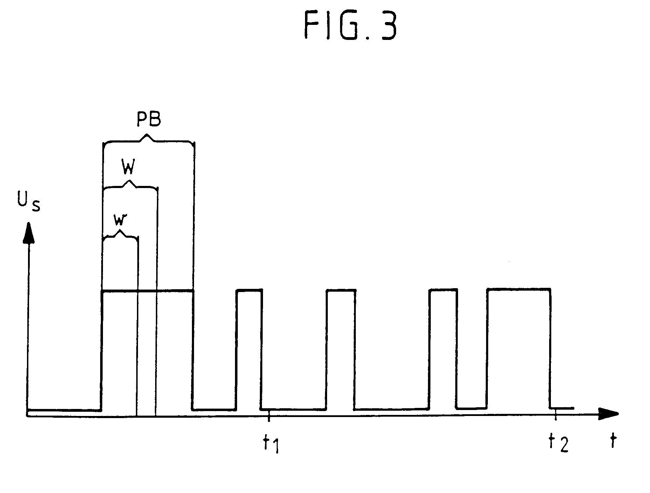

An der Ausgangsklemmme DF des Reglers liegt eine Rechteckimpuls-Spannung an, deren zeitlicher Verlauf in Fig. 3 dargestellt ist. Wie aus Fig. 3 ersichtlich, ist die Impulsbreite PB der Rechteckspannungsimpulse an der Ausgangsklemme DF zeitlich veränderlich. Bei schwach ausgelastetem Generator ist die Impulsbreite der Spannung an der Klemme DF groß, da der Erregerstromkreis länger unterbrochen ist und demzufolge an der Klemme DF ein hoher Spannungspegel anliegt. Ist der Generator hingegen voll ausgelastet oder sogar überlastet, so weisen die Impulse der Spannung an der Anschlußklemme DF eine geringe Breite auf, da der Erregerstromkreis des Generators überwiegend geschlossen ist. Im geschlossenen Zustand ist nämlich der Transistor in der Ausgangstufe des Reglers leitend, was ein Absinken der Spannung an der Ausgangsklemme DF auf Massepotential zur Folge hat.

Die Reglerausgangsspannung des Reglers 10 an der Ausgangsklemme DF dient als Steuersignal und wird dem Spannungswandler 2 zugeführt. Der Spannungswandler 2 ist ein DC-DC-Wandler mit einem Steueranschluß S, einem Eingangsanschluß E und einem Ausgangsanschluß A, der mit dem Verbraucher 4 verbunden ist. Der DC-DCWandler 2 wird so gesteuert, daß die Ausgangsspannung Ua am Ausgangsanschluß A gleich der Eingangsspannung Ue (oder größer) am Eingangsanschluß E ist, wenn die Impulsbreite des Steuersignals am Steueranschluß S groß ist, und daß die Ausgangsspannung Ua kleiner als die Eingangsspannung Ue ist, wenn die Impulsbreite des Steuersignals einen unterern Grenzwert w unterschreitet. Demzufolge gelten folgende Beziehungen:

$$Ua\ (PB) = f\ (PB)$$

$$Ua < Ue, \text{ wenn } PB < w$$

$$Ua = Ue \text{ oder } Ua > Ue, \text{ wenn } PB > W$$

Ein DC-DC-Wandler 2, der wie oben beschrieben funktioniert, läßt sich bespielsweise aus einem Zähler und einem DA-Wandler zusammenbauen, dessen analoges Ausgangssignal zur Steuerung der Ausgangsstufe des DC-DC-Wandlers 2 dient. Ist der digitale Wert, der dem Zählerstand entspricht, hoch, so liegt am Ausgang des DA-Wandlers ein analoges Signal mit hohem Spannungspegel an, so daß die Ausgangsspannung an der Ausgangsstufe des DC-DC-Wandlers 2 hoch ist. Im umgekehrten Fall, das heißt im Falle des Vorhandenseins eines Reglersignals mit geringer Pulsbreite, wird die Ausgangsspannung an der Ausgangsstufe des DC-DC-Wandlers herabgesetzt.

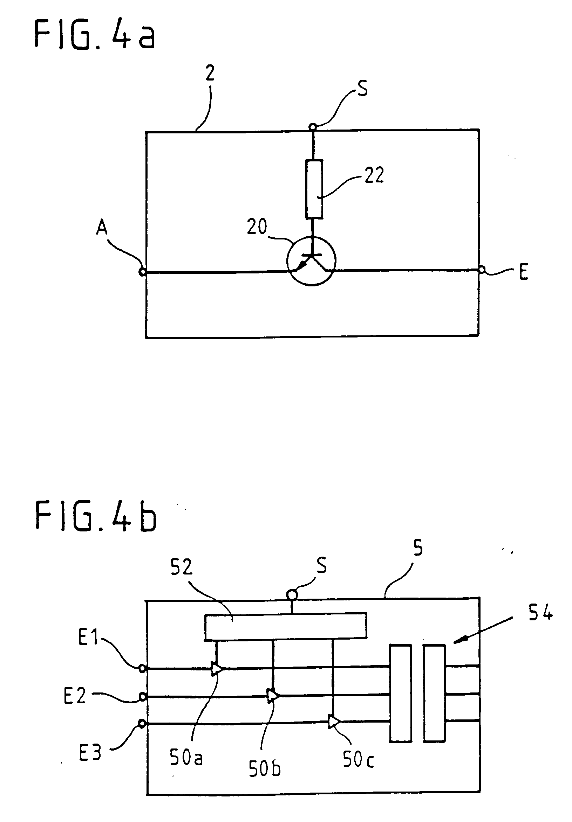

Fig. 4a zeigt eine andere Ausführungsvariante des DC-DC-Wandlers 2. Der darin dargestellte DC-DC-Wandler besteht im wesentlichen aus einem Transistor 20, der ein bipolarer Transistor oder ein Feldeffekttransistor sein kann, und einem Basiswiderstand 22. Dieser Wandler wandelt eine konstante Gleichspannung in eine getaktete Gleichspannung um, falls der Transistor 20 durch das Rechteckimpulssignal des Reglers 10 angesteuert wird.

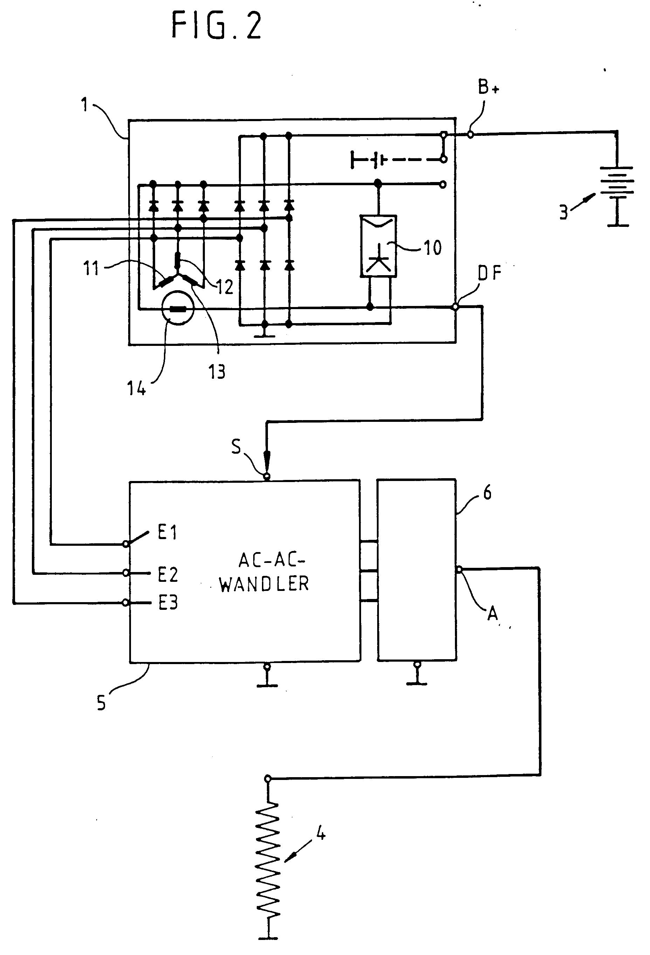

Im folgenden wird die zweite Ausführungsform der Erfindung beschrieben. Schaltungselemente in der Schaltungsanordnung aus Fig. 2, die gleich den Schaltungselementen aus der Schaltungsanordnung in Fig. 1 sind, wurden mit denselben Bezugszeichen versehen. Die Schaltungsanordnung in Fig. 2 unterscheidet sich im wesentlichen von der Schaltungsanordnung aus Fig. 1 nur dadurch, daß darin als Spannungswandler ein AC-AC-Wandler 5 mit drei Eingangsanschlüssen E1, E2 und E3 vorgesehen ist und daß dem Stromverbraucher 4 eine Gleichrichterschaltung 6 vorgeschaltet ist. An den Eingängen E1, E2 und E3 des AC-AC-Wandlers 5 liegen die in die Ständerwicklungen 11, 12 und 13 induzierten Wechselspannungen an. Der Spannungswandler kann, wie aus Fig. 4b ersichtlich, eine Thyristor-Einheit mit mehreren Thyristoren 50a, 50b und 50c enthalten. Die Thyristoren dienen als Wechselstromumrichter, die an den Eingängen E1, E2 und E3 anliegende Wechselströme einer gegebenen Spannung in einen bzw. mehrere Wechselströme von geringerer Spannung umwandeln. Der AC-AC-Wandler 5 enhält eine Schaltung 52, die vorgesehen ist, um das als Steuersignal genutzte Reglersignal am Steuereingang S des Wandlers 5 in für die Ansteuerung der Thyristoren geeignete Signale umzuwandeln. Es ist auch denkbar, am Ausgang des AC-AC-Wandlers einen Wechselstrom-Transformator 54 vorzusehen.

Durch die Ansteuerung der Thyristoren 50a, 50b und 50c mit dem Ausgangssignal des Reglers 10 läßt sich die Ausgangsspannung Uw des AC-AC-Wandlers wie die Ausgangsspannung des DC-DCWandlers steuern. Für die Ausgangsspannung des AC-AC-Wandlers 5 gelten die Beziehungen, die im Zusammenhang mit der Beschreibung der Schaltungsanordnung aus Fig. 1 weiter oben beschrieben worden sind.

Selbstverständlich lassen sich der DC-DC-Wandler und AC-AC-Wandler auch aus anderen Schaltungsbausteinen aufbauen. Der hier vorgeschlagene Schaltungsaufbau des DC-DC-Wandlers und des AC-AC-Wandlers stellt nur eine mögliche Ausführungsvariante einer Vielzahl von Ausführungsvarianten dar.

Schließlich soll das Verfahren zur Steuerung von Stromaufnahme der in einem Kraftfahrzeug untergebrachten Verbraucher anhand der Fig. 3 erläutert werden. Der zeitliche Verlauf eines möglichen, am Steueranschluß S des Spannungswandlers 2 bzw. 5 anliegenden Reglersignals ist in Fig. 3 dargestellt. Wie bereits erläutert, ist die Pulsbreite PB ein Maß für die Auslastung des Drehstromgenerators 1. Große Impulsbreiten PB lassen auf eine geringe Auslastung des Generators schließen und geringe Impulsbreiten PB lassen auf eine hohe Auslastung oder Überlastung des Generators 1 schließen. Unterschreitet die Impulsbreite des Rechteckimpulses der Steuerspannung eine untere Grenze w, wie dies beispielsweise zu einem Zeitpunkt $t_1$ der Fall ist, so wird die Ausgangsspannung des Spannungswandlers 2 bzw. 5 herabgesetzt, um die Stromaufnahme des an den Spannungswandler angeschlossenen Verbrauchers 4 zu reduzieren. Dies führt wiederum dazu, daß sich die Impulsbreite des Rechteckimpulses der Steuerspannung erhöht. Wie aus Fig. 3 ersichtlich, ist die Impulsbreite PB zu einem späteren Zeitpunkt $t_2$ bereits wesentlich größer als zu dem früheren Zeitpunkt $t_1$.

Die Impulsbreite ist beispielsweise zum Zeitpunkt $t_2$ größer als ein oberer Grenzwert W. Ist die Pulsbreite PB größer als ein oberer Grenzwert W, so wird die Ausgangsspannung des Spannungswandlers 2 oder 5 erhöht. Durch das Erhöhen und Herabsetzen der Ausgangsspannung der Spannungswandler ist gewährleistet, daß die Stromaufnahme des Verbrauchers nach oben begrenzt ist und eine Überlastung des Generators nicht eintritt.

**Patentansprüche**

1. Schaltungsanordnung zur Steuerung der Stromaufnahme eines oder mehrerer leistungsstarker Verbraucher (4) in einem Kraftfahrzeug, mit

    - einem Drehstromgenerator (1),

    - einem im Drehstromgenerator (1) untergebrachten Regler (10) zur Regelung der Generatorausgangsspannung mit einer Ausgangsklemme (DF),

    - einer durch den Drehstromgenerator (1) aufladbaren Fahrzeugbatterie (3), und

    - einem steuerbaren Spannungswandler (2; 5), der

        a) wenigstens einen Eingangsanschluß (E; E1, E2, E3) zum Empfangen einer von dem Drehstromgenerator (1) gelieferten Eingangsspannung (Ue) aufweist,

b) einen Steueranschluß (S) zum Empfangen eines an der Ausgangsklemme (DF) des Reglers (10) anliegenden Reglersignals (Us) besitzt, und

c) wenigstens einen Ausgangsanschluß (A) zur Versorgung des leistungsstarken Verbrauchers (4) mit einer Ausgangsspannung (Ua) aufweist,

d) wobei die Eingangsspannung (Ue) in Abhängigkeit von dem Reglersignal (Us) in eine Ausgangsspannung (Ua) umgewandelt wird.

2. Schaltungsanordnung nach Anspruch 1, bei der das Reglersignal (Us) ein Rechtecksignal mit veränderlicher Impulsbreite (PB) ist.

3. Schaltungsanordnung nach Anspruch 2, bei der der Spannungswandler ein DC-DC-Wandler mit einem Eingangsanschluß (E) und einem Ausgangsanschluß (A) ist, dessen Eingangsanschluß (E) zum Empfang der vom Drehstromgenerator (1) gelieferten Spannung (Ue) mit dessen Ausgangsanschluß (B+) verbunden ist und der eine von der Pulsbreite (PB) der Rechteckimpulse des Steuersignals (Us) abhängige Ausgangsspannung (Ua (PB)) liefert.

4. Schaltungsanordnung nach Anspruch 2 oder 3, bei der der DC-DC-Wandler (2) im wesentlichen einen Zähler zur Erfassung der Impulsbreite (PB) bzw. der Impulsdauer und einen DA-Wandler enthält, dessen Ausgangsspannung proportional zu dem vom Zähler gelieferten digitalen Wert ist.

5. Schaltungsanordnung nach Anspruch 2 oder 3, bei der der DC-DC-Wandler (2) die Gleichspannung am Eingang (E) mittels eines Transistors (20), an dessen Basis das Reglersignal (Us) anliegt, in eine getaktete Gleichspannung umwandelt und diese am Ausgangsanschluß (A) ausgibt.

6. Schaltungsanordnung nach Anspruch 2, bei dem der Spannungswandler (5) ein AC-AC-Wandler ist, an dessen Eingängen (E1, E2 und E3) die in Ständerspulen (11, 12, 13) des Drehstromgenerators (1) induzierten Wechselspannungen anlegen und der eine von der Pulsbreite (PB) der Rechteckimpulse des Reglersignals (Us) abhängige Ausgangswechselspannung (Uw (PB)) liefert.

7. Schaltungsanordnung nach Anspruch 5, bei der der AC-AC-Wandler (5) mehrere Thyristoren (50a, 50b und 50c) enthält, die über ihre Steueranschlüsse durch das Reglersignal gesteuert werden.

8. Schaltungsanordnung nach Anspruch 6, bei der die Ausgangsanschlüsse des AC-AC-Wandlers (5) mit den Eingängen einer dem leistungsstarken Verbraucher (4) vorgeschalteten Gleichrichterschaltung (6) verbunden sind.

9. Verfahren zur Steuerung der Stromaufnahme eines oder mehrerer leistungsstarker Verbraucher in einem Kraftfahrzeug, das mittels einer in Anspruch 1 angegebenen Schaltungsanordnung durchgeführt wird, in der an der Ausgangsklemme (DF) des Reglers (10) ein Reglersignal (Us) mit veränderlicher Pulsbreite (PB) anliegt, bei dem

- ein Herabsetzen der Ausgangsspannung (Ua) des Spannungswandlers (2, 5) erfolgt, wenn die Pulsbreite (PB) des an der Ausgangsklemme (DF) des Reglers (10) anliegenden Reglersignals (Us) einen unteren Grenzwert (w) unterschreitet und

- ein Erhöhen der Ausgangsspannung (Ua) des Spannungswandlers (2; 5) erfolgt, wenn die Pulsbreite (PB) des Reglersignals (Us) eine obere Grenze (W) überschreitet.

## Claims

1. Circuit configuration for controlling the current uptake of one or more high-capacity loads (4) in a motor vehicle, having

- an alternator (1),

- a controller (10) housed in the alternator (1) to regulate the alternator's output voltage with an output terminal (DF),

- a vehicle battery (3) which can be charged by the alternator (1), and

- a controllable voltage transformer (2; 5) which

  a) features at least one input connection (E; E1, E2, E3) for receiving an input voltage (Ue) delivered by the alternator (1),

  b) has a control connection (S) for receiving a controller signal (Us) arriving at the output terminal (DE) of the controller (10), and

  c) features at least one output connection (A) for supplying the high-capacity load (4) with an output voltage (Ua),

  d) with the input voltage (Ue) being converted into an output voltage (Ua) in dependence on the controller signal (Us).

**2.** Circuit configuration according to claim 1, in which the controller signal (Us) is a rectangular-pulse signal with a variable pulse width (PB).

**3.** Circuit configuration according to claim 2, in which the voltage transformer is a DC-DC converter having an input connection (E) and an output connection (A), of which the input connection (E) for receiving the voltage (Ue) delivered by the alternator (1) is wired to the output connection (B+) thereof and which delivers an output voltage (Ua(PB)) dependent upon the pulse width (PB) of the square-wave pulses of the control signal (Us).

**4.** Circuit configuration according to claim 2 or 3, in which the DC-DC converter (2) essentially comprises a counter for registering the pulse width (PB), or pulse duration, and a digital-output converter of which the output voltage is proportional to the digital value delivered by the counter.

**5.** Circuit configuration according to claim 2 or 3, in which the DC-DC converter (2) converts the direct voltage at the input (E) by means of a transistor (20) at the base of which the controller signal (Us) arrives, into a clocked direct voltage and outputs the latter at the output connection (A).

**6.** Circuit configuration according to claim 2, in which the voltage transformer (5) is an AC-AC converter at the inputs (E1, E2 and E3) of which arrive the alternating voltages induced in stator coils (11, 12, 13) of the alternator (1) and which delivers an output alternating voltage (Uw(PB)) dependent upon the pulse width (PB) of the square-wave pulses of the controller signal (Us).

**7.** Circuit configuration according to claim 5, in which the AC-AC converter (5) contains a plurality of thyristors (50a, 50b and 50c) which the controller signal controls via their control connections.

**8.** Circuit configuration according to claim 6, in which the output connections of the AC-AC converter (5) are wired to the inputs of a rectifier circuit (6) connected upstream of the high-capacity load (4).

**9.** Method for controlling the current uptake of one or more high-capacity loads in a motor vehicle, carried out by means of a circuit configuration specified in claim 1 wherein a controller signal (Us) with a variable pulse width (PB) arrives at the output terminal (DF) of the controller (10), in which

- a reduction in the output voltage (Ua) of the voltage transformer (2, 5) takes place whenever the pulse width (PB) of the controller signal (Us) arriving at the output terminal (DF) of the controller (10) falls below a lower threshold value (w) and

- an increase in the output voltage (Ua) of the voltage transformer (2; 5) takes place whenever the pulse width (PB) of the controller signal (Us) exceeds an upper limit (W).

**Revendications**

**1.** Circuiterie pour la commande de la consommation de courant d'un ou de plusieurs appareils utilisateurs de forte puissance (4) dans un véhicule automobile, comportant

- un générateur de courant triphasé (1),
- un régulateur (10) logé dans le générateur de courant triphasé (1), pour réguler la tension de sortie du générateur, et comportant une borne de sortie (DF),
- une batterie de véhicule (3) pouvant être chargée au moyen du générateur de courant triphasé (1), et
- un convertisseur de tension (2; 5) pouvant être commandé, qui

  a) comporte au moins une connexion d'entrée (E; E1, E2, E3) pour recevoir une tension d'entrée (Ue) fournie par le générateur de courant triphasé (1),
  b) possède une connexion de commande (S) pour recevoir un signal de régulation (Us) présent sur la borne de sortie (DF) du régulateur (10), et
  c) comporte au moins une connexion de sortie (A) pour l'alimentation de l'appareil utilisateur de forte puissance (4) avec une tension de sortie (Ua),
  d) la tension d'entrée (Ue) étant alors convertie, en fonction du signal de régulation (Us), en une tension de sortie (Ua).

**2.** Circuiterie selon la revendication 1, dans laquelle le signal de régulation (Us) est un signal rectangulaire à largeur d'impulsion variable (PB).

**3.** Circuiterie selon la revendication 2, dans laquelle le convertisseur de tension est un convertisseur continu-continu muni d'une connexion d'entrée (E) et d'une connexion de sortie (A), dont la connexion d'entrée (E) est reliée à la connexion de sortie (B+) du générateur de courant triphasé (1), afin de recevoir la tension (Ue) fournie par ce dernier, et qui fournit une tension de sortie (Ua (PB)) fonction de la largeur d'impulsion (PB) des impulsions rectangulaires du signal de régulation (Us).

**4.** Circuiterie selon la revendication 2 ou 3, dans laquelle le convertisseur continu-continu (2) contient essentiellement un compteur, destiné à détecter la largeur d'impulsion (PB) ou la durée des impulsions, et un convertisseur numérique/analogique, dont la tension de sortie est proportionnelle à la valeur numérique fournie par le compteur.

**5.** Circuiterie selon la revendication 2 ou 3, dans laquelle le convertisseur continu-continu (2) convertit, au moyen d'un transistor (20) sur la base duquel le signal de régulation (Us) est appliqué, la tension continue présente à l'entrée (E) en une tension continue cyclique et délivre cette dernière sur la connexion de sortie (A).

**6.** Circuiterie selon la revendication 2, dans laquelle le convertisseur de tension (5) est un convertisseur alternatif-alternatif, sur les entrées (E1, E2 et E3) duquel sont appliquées les tensions alternatives induites dans des bobinages de stator (11, 12, 13) du générateur de courant triphasé (1) et qui fournit une tension alternative de sortie (Uw (PB)) fonction de la largeur d'impulsion (PB) des impulsions rectangulaires du signal de régulation (Us).

**7.** Circuiterie selon la revendication 5, dans laquelle le convertisseur alternatif-alternatif (5) contient plusieurs thyristors (50a, 50b et 50c) qui, au travers de leurs bornes de gâchette, sont commandés par le signal de régulation.

**8.** Circuiterie selon la revendication 6, dans laquelle les connexions de sortie du convertisseur alternatif-alternatif (5) sont reliées aux entrées d'un circuit redresseur (6) monté en amont de l'appareil utilisateur de forte puissance (4).

**9.** Procédé pour commander la consommation de courant d'un ou de plusieurs appareils utilisateurs de forte puissance dans un véhicule automobile, qui est mis en oeuvre au moyen d'une circuiterie telle qu'indiquée dans la revendication 1, dans laquelle un signal de régulation (Us) à largeur d'impulsion variable (PB) est présent sur la borne de sortie (DF) du régulateur (10), procédé selon lequel

- un abaissement de la tension de sortie (Ua) du convertisseur de tension (2, 5) est effectué lorsque la largeur d'impulsion (PB) du signal de régulation (Us), qui est présent sur la borne de sortie (DF) du régulateur (10), passe en dessous d'une valeur limite inférieure (w) et
- une élévation de la tension de sortie (Ua) du convertisseur de tension (2; 5) est effectuée lorsque la largeur d'impulsion (PB) du signal de régulation (Us) passe au-dessus d'une limite

supérieure (W).

# FIG.1

# FIG.2

# FIG.3

# FIG. 4 a

# FIG. 4 b